(19) Europäisches Patentamt / European Patent Office / Office européen des brevets

(11) **EP 2 841 979 B1**

(12) **EUROPÄISCHE PATENTSCHRIFT**

(45) Veröffentlichungstag und Bekanntmachung des Hinweises auf die Patenterteilung:
**14.09.2016 Patentblatt 2016/37**

(21) Anmeldenummer: **13706014.1**

(22) Anmeldetag: **26.02.2013**

(51) Int Cl.:
*G02B 26/10* (2006.01)   *G02B 27/00* (2006.01)
*H04N 9/31* (2006.01)   *G02B 26/08* (2006.01)
*G03B 21/20* (2006.01)   *G02B 7/182* (2006.01)

(86) Internationale Anmeldenummer:
**PCT/EP2013/053781**

(87) Internationale Veröffentlichungsnummer:
**WO 2013/159953 (31.10.2013 Gazette 2013/44)**

(54) **VERFAHREN ZUM AUSRICHTEN EINES RASTER-SPIEGELS UND RASTERSPIEGELVORRICHTUNG**

METHOD FOR ADJUSTING A SCAN MIRROR AND SCAN MIRROR DEVICE

PROCÉDÉ D'AJUSTEMENT D'UN MIROIR DE BALAYAGE ET APPAREIL DE MIROIR DE BALAYAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.04.2012 DE 102012206729**

(43) Veröffentlichungstag der Anmeldung:
**04.03.2015 Patentblatt 2015/10**

(73) Patentinhaber: **Robert Bosch GmbH
70442 Stuttgart (DE)**

(72) Erfinder:
• **FIESS, Reinhold
  77770 Durbach (DE)**
• **FISCHER, Frank
  72810 Gomaringen (DE)**
• **REISS, Sebastian
  72768 Reutlingen (DE)**
• **PILARD, Gael
  72127 Wankheim (DE)**

(56) Entgegenhaltungen:
**US-A1- 2007 171 497     US-A1- 2010 118 371
US-A1- 2011 317 130     US-B1- 6 776 492**

**Beschreibung**

Die Erfindung betrifft ein Verfahren zum Ausrichten eines Lichtstrahls. Des Weiteren betrifft die Erfindung eine Spiegelvorrichtung.

Stand der Technik

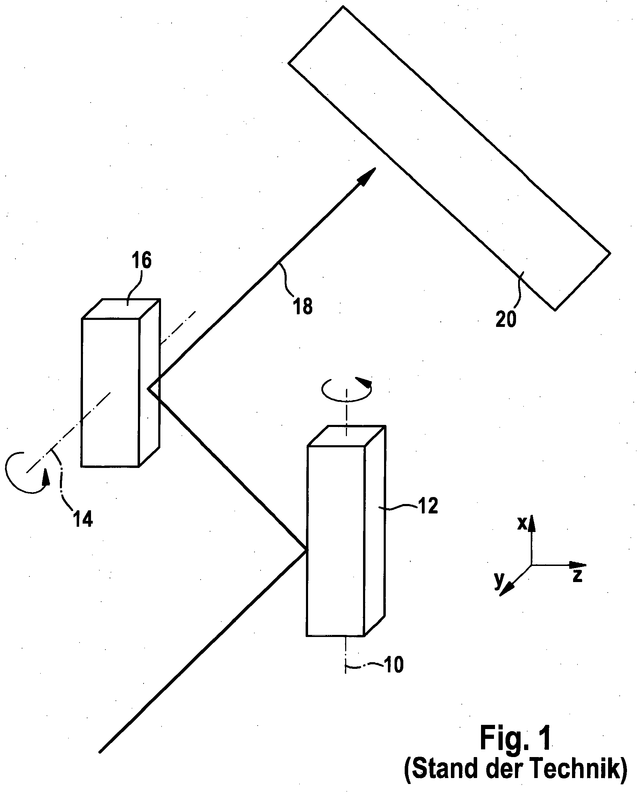

Fig. 1 zeigt eine schematische Darstellung eines herkömmlichen Spiegelgeräts.
Das in Fig. 1 dargestellte herkömmliche Spiegelgerät hat ein um eine erste Drehachse 10 verstellbar ausgebildetes erstes Spiegelelement 12 und ein um eine zweite Drehachse 14 verstellbar ausgebildetes zweites Spiegelelement 16. Die zweite Drehachse 14 ist senkrecht zu der ersten Drehachse 10 ausgerichtet. Die beiden Spiegelelemente 12 und 16 sind so zueinander angeordnet, dass ein von dem ersten Spiegelelement 12 abgelenkter Lichtstrahl 18 auf das zweite Spiegelelement 16 trifft. Mittels der beiden Spiegelelemente 12 und 16 soll der Lichtstrahl 18 so auf eine Lichtauftrefffläche 20 ausrichtbar sein, dass beispielsweise ein Bild projizierbar ist.
Ein weiteres System mit zwei Scanspiegeln deren Scanachsen verstellbar sind ist aus US 6,776,492 B1 bekannt.

Offenbarung der Erfindung

Die Erfindung schafft ein Verfahren zum Projizieren eines Bilds mit den Merkmalen des Anspruchs 1, eine, Bildprojektor mit den Merkmalen des Anspruchs 6, ein Mobiltelefon mit den Merkmalen des Anspruchs 11 und ein persönliches digitales Assistent-Gerät mit den Merkmalen des Anspruchs 12.

Vorteile der Erfindung

Die vorliegende Erfindung ermöglicht ein Ablenken/Umlenken/Verkippen eines an den beiden Spiegelelementen reflektierten Lichtstrahls um den dritten Umlenkwinkel (zusätzlich zu der Umlenkung des Lichtstrahls um den ersten Umlenkwinkel und den zweiten Umlenkwinkel), wobei gleichzeitig mittels des ausgeführten Verstellens des ersten Spiegelelements um den ersten Ausgleichwinkel und/oder des zweiten Spiegelelements um den zweiten Ausgleichwinkel eine verbesserte Justiergenauigkeit/Zielgenauigkeit beim Ausrichten des reflektierten Lichtstrahls auf einen bevorzugten Auftreffpunkt bewirkbar ist. Man kann diesen Vorteil auch so umschreiben, dass eine auftretende Verzerrung/Deformation einer abgerasterten Fläche und/oder eines projizierten Bilds mittels des ausgeführten Verstellens des ersten Spiegelelements um den ersten Ausgleichwinkel und/oder des zweiten Spiegelelements um den zweiten Ausgleichwinkel reduzierbar ist.
Beispielsweise kann mittels des zusätzlichen Umlenkens des reflektierten Lichtstrahls um den dritten Umlenkwinkel verhindert werden, dass ein mittels der vorliegenden Erfindung projiziertes Bild teilweise auf eine Aufliegefläche der zur Projektion verwendeten Spiegelvorrichtung trifft/fällt. Das Umlenken des Lichtstrahls um den dritten Umlenkwinkel durch das zusätzliche Verstellen des zweiten Spiegelelements um die dritte Drehachse kann somit zu einem vollständigeren projizierten Bild für einen Betrachter beitragen. Gleichzeitig kann mittels des zusätzlichen Verstellens des ersten Spiegelelements um den ersten Ausgleichwinkel und/oder des zweiten Spiegelelements um den zweiten Ausgleichwinkel eine bessere Auflösung/Bildschärfe gewährleistet werden. Die vorliegende Erfindung trägt damit vorteilhaft zu einem für einen Betrachter besser wahrnehmbaren projizierten Bild bei.
Vorteilhafte Ausführungsformen der vorliegenden Erfindung sind in den Unteransprüchen beispielhaft beschrieben.

Kurze Beschreibung der Zeichnungen

Weitere Merkmale und Vorteile der vorliegenden Erfindung werden nachfolgend anhand der Figuren erläutert. Es zeigen:

Fig. 1          eine schematische Darstellung eines herkömmlichen Spiegelgeräts;

Fig. 2a bis 2f    schematische Darstellungen von Spiegelelementen, projizierte Lichtpunkte und Koordinatensysteme zum Erläutern einer ersten Ausführungsform des Verfahrens zum Ausrichten eines Lichtstrahls; und

Fig. 3a und 3b    zwei Koordinatensysteme zum Erläutern einer zweiten Ausführungsform des Verfahrens zum Ausrichten eines Lichtstrahls.

Ausführungsformen der Erfindung

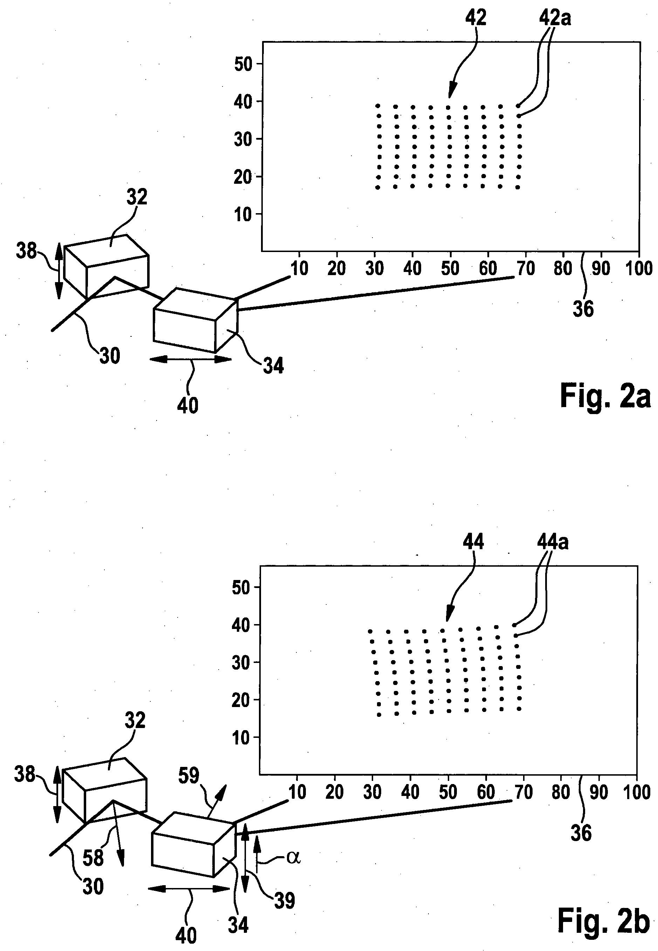

Fig. 2a bis 2f zeigen schematische Darstellungen von Spiegelelementen, projizierte Lichtpunkte und Koordinatensysteme zum Erläutern einer ersten Ausführungsform des Verfahrens zum Ausrichten eines Lichtstrahls.
Fig. 2a gibt schematisch einen ersten Verfahrensschritt des Verfahrens zum Ausrichten eines Lichtstrahls wieder. Dabei wird ein Lichtstrahl 30, z.B. ein Laserstrahl, mittels eines ersten Spiegelelements 32 und eines zweiten Spiegelelements 34 umgelenkt. Das erste Spiegelelement 32 und das zweite Spiegelelement 34 sind so zueinander ausgerichtet, dass eine Reflexion des ersten Spiegelelements 32 auf das zweite Spiegelelement 34, insbesondere auf eine reflektierende Fläche des zweiten Spiegelelements 34, fällt. Das hier beschriebene Verfahren ist jedoch nicht auf eine derartige Ausrichtung der beiden Spiegelelemente 32 und 34 zueinander limitiert. Ebenso können die beiden Spiegelelemente 32 und 34 auch so zueinander ausgerichtet sein, dass eine Reflexion des zweiten Spiegelelements 34 auf das erste Spiegelelement 32, insbesondere eine reflektierende Fläche des ersten Spiegelelements 32, fällt.

Der mittels der beiden Spiegelelemente 32 und 34 umgelenkte Lichtstrahl 30 wird auf eine Lichtauftrefffläche 36 gerichtet. Insbesondere wird bei dem Verfahren eine Fläche der Lichtauftrefffläche 36 mit dem Lichtstrahl 30 abgerastert. Beim Abrastern zumindest einer Teilfläche der Lichtauftrefffläche 36 werden das erste Spiegelelement 32 (um mindestens einen ersten Umlenkwinkel ungleich Null) um eine erste Drehachse 38 und das zweite Spiegelelement 34 (um mindestens einen zweiten Umlenkwinkel ungleich Null) um eine zweite Drehachse 40 verstellt. Für den ersten Umlenkwinkel und/oder den zweiten Umlenkwinkel können Werte aus einem Wertebereich mit einer vorgegebenen Schrittweite nacheinander eingestellt werden. Die zweite Drehachse 40 ist geneigt zu der ersten Drehachse 38 ausgerichtet. Vorzugsweise ist die zweite Drehachse 40 senkrecht zu der ersten Drehachse 38 gerichtet. Insbesondere können die erste Drehachse 38 die Horizontalachse (um eine Vertikalauslenkung zu erzeugen) und die zweite Drehachse 40 die Vertikalachse (für eine Horizontalauslenkung) sein. Die Ausführbarkeit des im Weiteren beschriebenen Verfahrens ist jedoch nicht auf eine derartige Festlegung der beiden Drehachsen 38 und 40 limitiert.

Fig. 2a zeigt auch ein virtuelles (hypothetisches) Bild 42 aus Punkten/Lichtpunkten 42a, welches sich auf der Lichtauftrefffläche 36 ergeben würde, sofern lediglich der bis jetzt beschriebene Verfahrensschritt ausgeführt wird.

Fig. 2b zeigt einen weiteren Verfahrensschritt, welcher während eines Verstellens des ersten Spiegelelements 32 (um den ersten Umlenkwinkel ungleich Null) um die erste Drehachse 38 und des zweiten Spiegelelements 34 (um den zweiten Umlenkwinkel ungleich Null) um die zweite Drehachse 40 ausgeführt wird. Dabei wird das zweite Spiegelelement 34 zusätzlich um einen dritten Umlenkwinkel $\alpha$ (ungleich Null) um eine dritte Drehachse 39 verstellt, welche geneigt zu der zweiten Drehachse 40 ausgerichtet ist. Die dritte Drehachse 39 kann insbesondere parallel zu der ersten Drehachse 38 ausgerichtet sein. Die Ausführbarkeit des im Weiteren beschriebenen Verfahrens ist jedoch nicht auf eine parallle Ausrichtung der dritten Drehachse 39 zu der ersten Drehachse 38 limitiert. Durch das zusätzliche Verstellen des zweiten Spiegelelements 34 um den dritten Umlenkwinkel $\alpha$ (ungleich Null) ist eine Verkippung/Verschwenkung der mittels des ausgerichteten Lichtstrahls 30 abgescannten Fläche und/oder des mittels des ausgerichteten Lichtstrahls 30 projizierten Bilds bewirkbar.

Beispielsweise sind die Spiegelelemente 32 und 34 häufig in einem Gehäuse angeordnet, welches auf einer Aufliegefläche liegt. Das Gehäuse kann insbesondere vergleichsweise kleine Ausdehnungen haben.

Ein derartiges Gehäuse wird häufig auf einer Aufliegefläche angeordnet/abgelegt, deren Ausdehnungen im Vergleich zu der Größe des Gehäuses relativ groß sind. Herkömmlicherweise führt dies manchmal dazu, dass der mittels der Spiegelelemente 32 und 34 ausgerichtete Lichtstrahl 30 zumindest zeitweise auf die Aufliegefläche, und nicht auf die gewünschte Lichtauftrefffläche 36 fällt. Beispielsweise kann das Gehäuse ein Mobiltelefongehäuse oder ein Gehäuse eines (tragbaren) persönlichen digitalen Assistent-Geräts (Mobiler Assistent, PDA, Personal Digital Assistant) sein. Eine Ablage eines Mobiltelefons oder eines (tragbaren) persönlichen digitalen Assistent-Geräts auf einem Tisch hat herkömmlicherweise oft zur Folge, dass das projizierte Bild zumindest teilweise auf die Tischfläche fällt.

Durch das zusätzliche Verstellen des zweiten Spiegelelements 34 um den dritten Umlenkwinkel $\alpha$ ist mittels des hier beschriebenen Verfahrens eine Verkippung der abgerasterten Fläche/des projizierten Bilds so ausführbar, dass der ausgerichtete Lichtstrahl 30 über die (nicht dargestellte) Aufliegefläche (der Spiegelelemente 32 und 34) ausgerichtet wird und somit auf die gewünschte Lichtauftrefffläche 36, beispielsweise eine Wand oder einen Schirm, trifft. Durch das zusätzliche Verstellen des zweiten Spiegelelements 34 um den dritten Umlenkwinkel $\alpha$ (ungleich Null) kann das zweite Spiegelelement 34 zur Verkippung der abgerasterten Fläche/des projizierten Bilds genutzt werden. Damit entfällt die Notwendigkeit, das erste Spiegelelement 32 zusätzlich um den dritten Umlenkwinkel $\alpha$ um die erste Drehachse 38 oder die dritte Drehachse 39 zu verstellen, was zu einer weiteren Ablenkung des Lichtauftreffpunkts der Reflexion des ersten Spiegelelements 32 auf dem zweiten Spiegelelement 34 führen würde. Deshalb kann die vorteilhafte Verkippung der abgerasterten Fläche/des projizierten Bilds auch ausgeführt werden, ohne dass dazu die reflektierende Fläche des zweiten Spiegelelements 34 zu vergrößern ist.

Fig. 2b zeigt auch ein virtuelles (hypothetisches) Bild 44 aus Punkten/Lichtpunkten 44a, welches sich ergeben würde, sofern lediglich die bisher beschriebenen Verfahrensschritte ausgeführt werden. Zu erkennen ist, dass die Verkippung zu einer Deformation der abgerasterten Fläche/des projizierten Bilds führen kann. Mittels des nachfolgend beschriebenen Verfahrensschritts kann diese Deformation jedoch zumindest teilweise kompensiert/ausgeglichen werden:

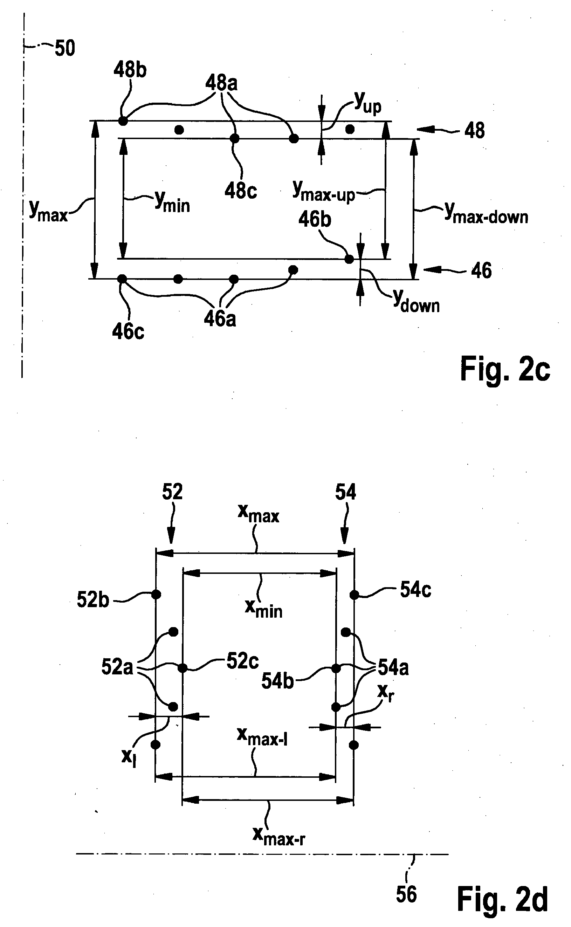

Wie anhand der Figuren 2c und 2d dargestellt ist, kann die Deformation eines mittels des Verfahrens zum Ausrichten eines Lichtstrahls projizierten Bilds durch eine vertikale Deformation $D_{vert}$ und eine horizontale Deformation $D_{hor}$ beschrieben werden.

Fig. 2c zeigt zwei benachbarte und horizontal ausgerichtete Linien 46 und 48 als Teilausschnitt des mittels des Verfahrens zum Ausrichten eines Lichtstrahls projizierten Bilds. Die vertikale Deformation $D_{vert}$ ist nach Gleichung (Gl 1) definiert mit:

$$(GI\ 1) \qquad D_{vert} = (y_{max} - y_{min})/y_{max},$$

wobei $y_{max}$ eine maximale Abstandskomponente in vertikaler Raumrichtung der Punkte/Lichtpunkte/Auftreffpunkte 46a der ersten horizontal ausgerichteten Linie 46 von den Punkten/Lichtpunkten/Auftreffpunkte 48a der zweiten horizontal ausgerichteten Linie 48 und $y_{min}$ eine minimale Abstandskomponente in vertikaler Raumrichtung der Punkte/Lichtpunkte 46a der ersten horizontal ausgerichteten Linie 46 von den Punkten/Lichtpunkten 48a der zweiten horizontal ausgerichteten Linie 48 sind. Unter der maximalen Abstandskomponente $y_{max}$ in vertikaler Raumrichtung und/oder der minimalen Abstandskomponente $y_{min}$ in vertikaler Raumrichtung ist vorzugsweise jeweils eine parallel zu der Vertikalachse/Gravitationsachse 50 ausgerichtete Abstandskomponente (z.B. eines Abstandsvektors zwischen einem Punkt/Lichtpunkt 46a und einem Punkt/Lichtpunkt 48a) zu verstehen. (Die Vertikalachse/Gravitationsachse 50 kann insbesondere parallel zu der ersten Drehachse 38 oder der zweiten Drehachse 40 ausgerichtet sein.)

Außerdem kann die Deformation des mittels des Verfahrens zum Ausrichten eines Lichtstrahls projizierten Bilds auch durch eine aufwärts gerichtete vertikale Deformation $D_{vert-up}$ und/oder durch eine abwärts gerichtete vertikale Deformation $D_{vert-down}$ umschrieben werden. Sofern die zweite horizontal ausgerichtete Linie 48 über der ersten horizontal ausgerichteten Linie 46 liegt, ist die aufwärts gerichtete vertikale Deformation $D_{vert-up}$ nach Gleichung (GI 2) umschreibbar mit:

$$(GI\ 2) \qquad D_{vert-up} = y_{up}\ /\ y_{max-up},$$

wobei $y_{max-up}$ eine maximale Abstandskomponente in vertikaler Raumrichtung (parallel zur Vertikalachse/Gravitationsachse 50) des höchsten Punktes 46b der ersten horizontal ausgerichteten Linie von dem höchsten Punkt 48b der zweiten horizontal ausgerichteten Linie 48 und $y_{up}$ eine Streubreite in vertikaler Raumrichtung (parallel zur Vertikalachse/Gravitationsachse 50) der Punkte 48a der zweiten horizontal ausgerichteten Linie sind.

Ebenso ist die abwärts gerichtete vertikale Deformation $D_{vert-down}$ nach Gleichung (GI 3) definierbar mit:

$$(GI\ 3) \qquad D_{vert-down} = y_{down}\ /\ y_{max-down},$$

wobei $y_{max-down}$ eine Abstandskomponente in vertikaler Raumrichtung (parallel zur Vertikalachse/Gravitationsachse 50) des niedrigsten Punktes 46c der ersten horizontal ausgerichteten Linie 46 von dem niedrigsten Punkt 48c der zweiten horizontal ausgerichteten Linie 48 und $y_{down}$ eine Streubreite in vertikaler Raumrichtung (parallel zur Vertikalachse/Gravitationsachse 50) der Punkte 46a der ersten horizontal ausgerichteten Linie 46 sind.

Fig. 2d zeigt zwei benachbarte und vertikal ausgerichtete Linien 52 und 54 des mittels des Verfahrens zum Ausrichten eines Lichtstrahls projizierten Bilds. Die Horizontalachse 56 ist ebenfalls in Fig. 2d eingezeichnet. Die horizontale Deformation $D_{hor}$ ist nach Gleichung (GI 4) definiert mit:

$$(GI\ 4) \qquad D_{hor} = (x_{max} - x_{min})/x_{max},$$

wobei $x_{max}$ eine maximale Abstandskomponente in horizontaler Raumrichtung der Punkte/Lichtpunkte/Auftreffpunkte 52a der ersten vertikal ausgerichteten Linie 52 von den Punkten/Lichtpunkten/Auftreffpunkte 54a der zweiten vertikal ausgerichteten Linie 54 und $y_{min}$ eine minimale Abstandskomponente in horizontaler Raumrichtung der Punkte/Lichtpunkte 52a der ersten vertikal ausgerichteten Linie 52 von den Punkten/Lichtpunkten 54a der zweiten vertikal ausgerichteten Linie 54 sind. (Unter der maximalen Abstandskomponente $x_{max}$ in horizontaler Raumrichtung und/oder der minimalen Abstandskomponente $x_{min}$ in horizontaler Raumrichtung ist vorzugsweise jeweils eine parallel zu der Horizontalachse 56 ausgerichtete Abstandskomponente eines Abstandsvektors zwischen einem Punkt/Lichtpunkt 52a und einem Punkt/Lichtpunkt 54a zu verstehen. Die Horizontalachse 56 kann insbesondere parallel zu der ersten Drehachse 38 oder der zweiten Drehachse 40 ausgerichtet sein.)

Ebenso kann die Deformation des mittels des Verfahrens zum Ausrichten eines Lichtstrahls projizierten Bilds auch durch eine linksgerichtete horizontale Deformation $D_{hor-l}$ und/oder durch eine rechtsgerichtete horizontale Deformation $D_{hor-r}$ umschrieben werden. Sofern die zweite vertikal ausgerichtete Linie 54 rechts von der ersten vertikal ausgerichteten Linie 52 liegt, ist die linksgerichtete horizontale Deformation $D_{hor-l}$ nach Gleichung (GI 5) umschreibbar mit:

$$(GI\ 5) \qquad D_{hor-l} = x_l\ /\ x_{max-l},$$

wobei $x_{max-l}$ eine maximale Abstandskomponente in horizontaler Raumrichtung (parallel zur Horizontalachse 56) des am Weitesten nach links projizierten Punkts 52b der ersten vertikal ausgerichteten Linie 52 von dem am Weitesten nach links projizierten Punkt 54b der zweiten vertikal ausgerichteten Linie 54 und $x_l$ eine Streubreite in horizontaler Raumrichtung (parallel zur Horizontalachse 56) der Punkte 52a der ersten vertikal ausgerichteten Linie 52 sind.

Außerdem ist die rechtsgerichtete horizontale Deformation $D_{hor-r}$ nach Gleichung (GI 6) definierbar mit:

$$(GI\ 5) \qquad D_{hor-r} = x_r\ /\ x_{max-r},$$

wobei $x_{max-r}$ eine maximale Abstandskomponente in horizontaler Raumrichtung (parallel zur Horizontalachse 56) des am Weitesten nach rechts projizierten Punkts 52c der ersten vertikal ausgerichteten Linie 52 von dem am Weitesten nach rechts projizierten Punkt 54c der zweiten vertikal ausgerichteten Linie 54 und $x_r$ eine Streubreite in horizontaler Raumrichtung (parallel zur Horizontalachse 56) der Punkte 54a der zweiten vertikal ausgerichteten Linie 54 sind.

Zum Reduzieren einer Deformation eines mittels des hier beschriebenen Verfahrens projizierten Bilds umfasst das Verfahren einen weiteren Verfahrensschritt, welcher während eines Verstellens des zweiten Spiegelelements 34 zusätzlich um den dritten Umlenkwinkel α um die dritte Drehachse 39 ausgeführt wird. Dazu werden das erste Spiegelelement 32 um einen für den dritten Umlenkwinkel α vorgegeben ersten Ausgleichwinkel (ungleich Null) um eine erste Spiegelnormale 58 des ersten Spiegelelements 32 und/oder das zweite Spiegelelement 34 um einen für den dritten Umlenkwinkel α vorgegebenen zweiten Ausgleichwinkel (ungleich Null) um eine zweite Spiegelnormale 59 des zweiten Spiegelelements 34 verstellt. Unter der Spiegelnormale 58 oder 59 eines Spiegelelements 32 oder 34 kann insbesondere eine Achse verstanden werden, welche senkrecht zu einer reflektierenden Lichtauftrefffläche des jeweiligen Spiegelelements 32 oder 34 ausgerichtet ist.

Durch das zusätzliche Verstellen mindestens eines Spiegelelements 32 und 34 um die jeweilige Spiegelnormale 58 oder 59 kann eine durch das Verstellen des zweiten Spiegelelements 34 um den dritten Umlenkwinkel α herkömmlicherweise bewirkte Deformation zumindest teilweise korrigiert werden. Somit ist trotz der Verkippung des projizierten Bilds auch eine vorteilhafte Genauigkeit/Auflösung des projizierten Bilds gewährleistbar.

Herkömmlicherweise kann eine durch ein Verkippen eines projizierten Bilds ausgelöste Bilddeformation dieses signifikant verzerren, insbesondere sofern die Verkippung um einen vergleichsweise großen dritten Umlenkwinkel α erfolgt, da die Deformation proportional zum dritten Umlenkwinkel α sein kann. Jedoch ist häufig eine Verkippung um einen vergleichsweise großen dritten Umlenkwinkel α notwendig, um beispielsweise zu verhindern, dass ein mittels einer auf einen Tisch platzierten Mikrospiegelvorrichtung projiziertes Bild auf eine Tischplatte fällt. Somit können herkömmlicher Weise Bilddeformationen mit einer vertikalen Deformation $D_{vert}$ von bis zu 15% oder mehr und einer horizontalen $D_{hor}$ von bis zu 10% oder mehr auftreten. Mittels des hier beschriebenen Verfahrens zum Ausrichten eines Lichtstrahls können jedoch derartige hohe Deformationen verlässlich verhindert werden, auch wenn das zweite Spiegelelement 34 um einen vergleichsweise großen dritten Umlenkwinkel α verstellt wird.

Außerdem bietet das hier beschriebene Verfahren zum Ausrichten eines Lichtstrahls ein verlässliches Verhindern einer vertikalen und/oder horizontalen Deformation $D_{vert}$ und $D_{hor}$ ohne eine elektrische Bildkorrektur/Bildkompensation, bei welcher herkömmlicher Weise zum Reduzieren der vertikalen und/oder horizontalen Deformation $D_{vert}$ und $D_{hor}$ oft neue erste Umlenkwinkel und/oder zweite Umlenkwinkel berechnet werden, die an den dritten Umlenkwinkel α angepasst sein sollen. Eine derartige elektrische Bildkorrektur gemäß dem Stand der Technik führt häufig jedoch auch zu einer verschlechterten Bildauflösung und zu einer Verringerung der projizierbaren Bilddimensionen. Dieser Nachteil tritt bei dem hier beschriebenen Verfahren nicht auf. Außerdem benötigt das Ausführen einer elektrischen Bildkorrektur eine vergleichsweise aufwändige Elektronik mit einer relativ großen Speicherkapazität zum Neuberechnen des ersten Umlenkwinkels, des zweiten Umlenkwinkels und/oder der Pixelkoordinaten des zu projizierenden Bilds. Demgegenüber ist das hier beschriebene Verfahren zum Ausrichten eines Lichtstrahls auch mittels einer kostengünstigen und wenig Bauraum benötigenden Elektronik ausführbar.

In einer bevorzugten Ausführungsform des Verfahrens wird (während des Verstellens des zweiten Spiegelelements 34 zusätzlich um den dritten Umlenkwinkel α um die dritte Drehachse 39) das erste Spiegelelement 32 um den für den dritten Umlenkwinkel α vorgegebenen ersten Ausgleichwinkel um die erste Spiegelnormale 58 des ersten Spiegelelements 32 verstellt. Ebenso wird das zweite Spiegelelement 34 (nahezu) gleichzeitig um den für den dritten Umlenkwinkel α vorgegebenen zweiten Ausgleichwinkel um die zweite Spiegelnormale 59 des zweiten Spiegelelements 34 verstellt. Dieses gemeinsame Verstellen der beiden Spiegelelemente 32 und 34 um die jeweils dazu vorgegebenen Ausgleichwinkel kann zu einer vorteilhaften Entzerrung des mittels des Verfahrens zum Auslenken eines Lichtstrahls projizierten Bilds beitragen. Somit ist für einen Betrachter des projizierten Bilds eine angenehme und deutliche Wahrnehmung von diesem gewährleistet.

Bei der Ausführung des Verfahrens können der erste Ausgleichwinkel und/oder der zweite Ausgleichwinkel fest vorgegeben werden. Ebenso können der erste Ausgleichwinkel und der zweite Ausgleichwinkel zumindest unter Berücksichtigung des (aktuell eingestellten) dritten Umlenkwinkels α festgelegt werden. Dies ist vorteilhaft, sofern bei dem Verfahren unterschiedliche dritte Umlenkwinkel α verwendet werden. In einer vorteilhaften Weiterbildung können der erste Ausgleichwinkel und/oder der zweite Ausgleichwinkel auch unter zusätzlicher Berücksichtigung des ersten Umlenkwinkels und/oder des zweiten Umlenkwinkels festgelegt werden.

Bevorzugter Weise wird der horizontale Ausgleichwinkel als erster Ausgleichwinkel oder als zweiter Ausgleichwinkel so vorgegeben oder festgelegt, dass eine vertikale Deformation $D_{vert}$, $D_{vert-down}$ und/oder $D_{vert-up}$ zweier benachbarter und horizontal ausgerichteter Linien 46 und 48 aus Punkten/Lichtpunkten 46a und 48a des ausgerichteten Lichtstrahls 30 auf einer Lichtauftrefffläche 36 reduziert wird. Als Alternative oder als Ergänzung dazu kann ein vertikaler Ausgleichwinkel als erster Ausgleichwinkel oder als zweiter Ausgleichwinkel auch so vorgegeben oder festgelegt werden, dass eine horizontale Deformation $D_{hor}$, $D_{hor-r}$ und/oder $D_{hor-l}$ zweier benachbarter und vertikal ausgerichteter Linien 52 und 54 aus Punkten/Lichtpunkten 52a und 54a des ausgerichteten Lichtstrahls 30 auf einer Lichtauftrefffläche 36 reduziert/minimiert wird. Insbesondere kann die Festlegung des vertikalen Ausgleichwinkels und/oder des horizontalen Ausgleichwinkels so erfolgen, dass mindestens eine vertikale Deformation $D_{vert}$, $D_{vert-down}$ und/oder $D_{vert-up}$ und/oder mindestens eine horizontale Deformation $D_{hor}$, $D_{hor-r}$ und/oder $D_{hor-l}$ ein Minimum erreicht.

Das gemeinsame Verstellen der beiden Spiegelelemente 32 und 34 um die jeweilige Spiegelnormale 58 und 59 ist einfach ausführbar, indem eine Halterung der beiden Spiegelelemente 32 und 34, wie beispielsweise ein Projektormodul, in Bezug zu deren Gehäuse verstellt wird. Dies gewährleistet ein schnelles Verstellen beider Spiegelelemente 32 und 34 um die jeweilige Spiegelnormale 58 und 59.

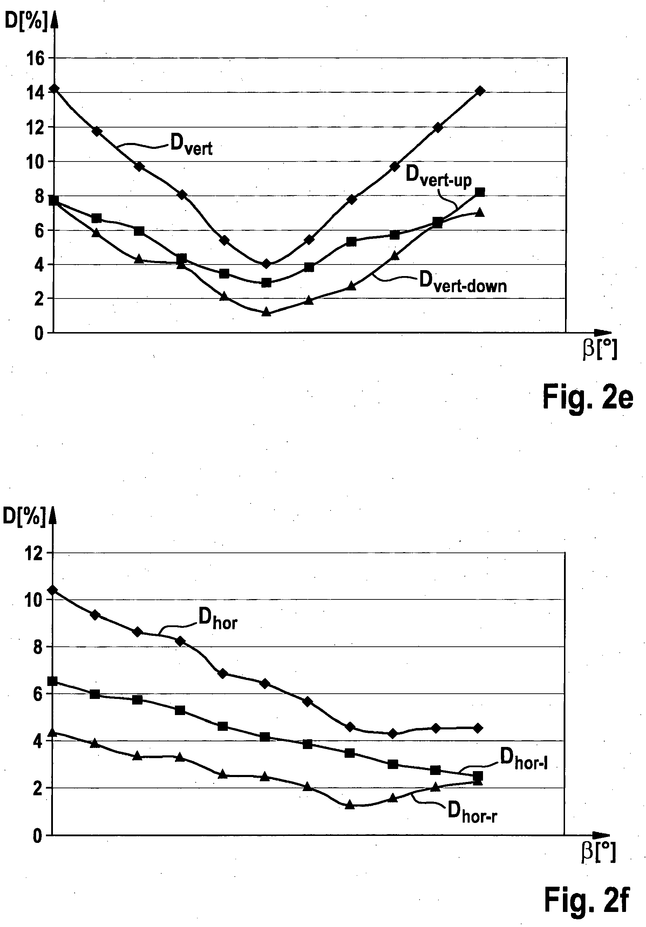

Fig. 2e und 2f zeigen zwei Koordinatensysteme zum Erläutern eines Ergebnisses eines derartigen Verfahrensschritts. Die Abszissen der Koordinatensysteme der Fig. 2e und 2f sind der gemeinsame Ausgleichwinkel $\beta$ (in Grad). Demgegenüber geben die Ordinaten der Koordinatensysteme der Fig. 2e und 2f Deformationswerte D (in Prozent) wieder.

In Fig. 2e sind die vertikale Deformation $D_{vert}$, die aufwärts gerichtete vertikale Deformation $D_{vert-up}$ und die abwärts gerichtete vertikale $D_{vert-down}$ eingetragen. Dabei ist zu erkennen, dass die Deformationswerte $D_{vert}$, $D_{vert-down}$ und $D_{vert-up}$ für einen bestimmten Ausgleichwinkel $\beta$ signifikante Minima aufweisen.

In das Koordinatensystem der Fig. 2f sind die horizontale Deformation $D_{hor}$, die linksgerichtete horizontale Deformation $D_{hor-l}$ und die rechtsgerichtete horizontal $D_{hor-r}$ eingetragen. Zu erkennen ist, dass die Deformationswerte $D_{hor}$, $D_{hor-r}$ und $D_{hor-l}$ mit einem zunehmenden Ausgleichwinkel $\beta$ abnehmen. Somit kann auch für diese Deformationswerte ein Ausgleichwinkel $\beta$ festgelegt werden, bei welchem die Deformationswerte $D_{hor}$, $D_{hor-r}$ und/oder $D_{hor-l}$ vergleichsweise niedrig sind.

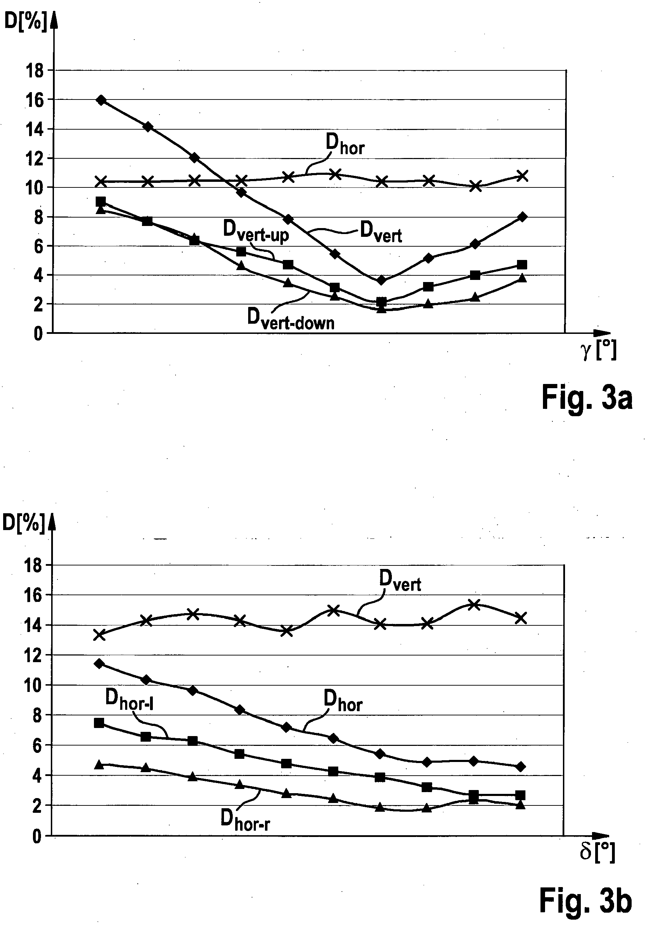

Fig. 3a und 3b zeigen zwei Koordinatensysteme zum Erläutern einer zweiten Ausführungsform des Verfahrens zum Ausrichten eines Lichtstrahls.

Das anhand der Fig. 3a und 3b schematisch wiedergegebene Verfahren weist die oben schon beschriebenen Verfahrensschritte auf. Als Abwandlung zu dem oben beschriebenen Verfahren werden bei der hier ausgeführten Ausführungsform die Spiegelelemente 32 und 34 um unterschiedliche Ausgleichwinkel $\gamma$ und $\delta$ um die jeweiligen Spiegelnormalen 58 und 59 verstellt.

Fig. 3a zeigt das Verstellen eines Spiegelelements 32 oder 34 um einen horizontalen Ausgleichwinkel $\gamma$ als erster Ausgleichwinkel oder als zweiter Ausgleichwinkel. (Unter dem horizontalen Ausgleichwinkel $\gamma$ ist der Ausgleichwinkel eines Spiegelelements 32 oder 34 zu verstehen, dessen erste oder zweite Drehachse 38 oder 40 horizontal, d. h. parallel zur Horizontalachse 56, ausgerichtet ist.) Während die Abszisse den horizontalen Ausgleichwinkel $\gamma$ (in Grad) angibt, entspricht die Ordinate den Deformationswerten D (in Prozent). Dabei ist zu erkennen, dass die vertikalen Deformationswerte $D_{vert}$, $D_{vert-down}$ und/oder $D_{vert-up}$ durch das Verstellen des horizontalen Ausgleichswinkels $\gamma$ auf ein gemeinsames Minimum einjustiert werden können, während die horizontale Deformation $D_{hor}$ trotz eines Variierens des horizontalen Ausgleichswinkels $\gamma$ (nahezu) konstant bleibt.

Fig. 3b gibt die Einflüsse eines ausgeführten vertikalen Ausgleichwinkels $\delta$ als erster Ausgleichwinkel oder als zweiter Ausgleichwinkel an. (Der vertikale Ausgleichwinkel ist der Ausgleichwinkel eines Spiegelelements 32 oder 34, dessen erste oder zweite Drehachse 38 oder 40 parallel zur Vertikalachse/Gravitationsachse 50 ausgerichtet ist). Die Abszisse gibt den vertikalen Ausgleichwinkels $\delta$ (in Grad) an, während die Ordinate die Deformationswerte D (in Prozent) anzeigt. Wie anhand der Fig. 3b zu erkennen ist, nehmen die horizontalen Deformationswerte $D_{hor}$, $D_{hor-r}$ und/oder $D_{hor-l}$ mit Zunahme des vertikalen Ausgleichwinkels $\delta$ ab, während die vertikale Deformation $D_{vert}$ trotz eines Variierens des vertikalen Ausgleichwinkels $\delta$ (nahezu) konstant bleibt.

Das individuelle Verstellen der Spiegelelemente 32 und 34 um unterschiedliche Ausgleichwinkel $\gamma$ und $\delta$ ist somit mit dem Vorteil verbunden, dass die vertikale Deformation $D_{vert}$, $D_{vert-down}$ und/oder $D_{vert-up}$ und die horizontale Deformation $D_{hor}$, $D_{hor-r}$ und/oder $D_{hor-l}$ unabhängig voneinander durch die geeignete Festlegung verschiedener Ausgleichwinkel $\gamma$ und $\delta$ limitierbar sind. Durch das Rotieren des Spiegelelements 32 oder 34 für das vertikale Abrastern, d. h. mit einer vertikal ausgerichteten Drehachse 38 oder 40, kann die horizontale Deformation $D_{hor}$, $D_{hor-r}$ und/oder $D_{hor-l}$ reduziert werden, während mittels eines Rotierens des Spiegelelements 32 oder 34 für das horizontale Abrastern die vertikale Deformation $D_{vert}$, $D_{vert-down}$ und/oder $D_{vert-up}$ auf einen vergleichsweise niedrigen Wert einstellbar ist.

Außerdem sind Mechanismen zum unabhängigen Verstellen der beiden Spiegelelemente 32 und 34 um unterschiedliche Ausgleichwinkel $\gamma$ und ö um die jeweilige Spiegelnormale 58 und 59 häufig leichter und kleiner ausbildbar als ein Mechanismus zum gemeinsamen Verstellen einer Halterung der beiden Spiegelelemente 32 und 34 in Bezug zu dem Gehäuse. Somit können mittels eines Ausführens dieser Ausführungsform ein Gewicht, eine Größe und/oder ein Bauraumbedarf der zum Ausführen des Verfahrens verwendeten Spiegelvorrichtung reduziert werden.

Das Verfahren zum Ausrichten eines Lichtstrahls ist in den oberen Absätzen anhand eines Verfahrens zum Projizieren eines Bilds aus Lichtpunkten beschrieben. Es wird jedoch darauf hingewiesen, dass die Ausführbarkeit des Verfahrens nicht auf die Projektion eines Bilds aus Lichtpunkten limitiert ist.

Die oben beschriebenen Ausführungsformen des Verfahrens zum Ausrichten eines Lichtstrahls können mittels einer Spiegelvorrichtung ausgeführt werden. Eine derartige Spiegelvorrichtung weist bevorzugt ein um eine erste Drehachse verstellbares erstes Spiegelelement und ein um eine zu der ersten Drehachse geneigte zweite Drehachse verstellbares zweites Spiegelelement auf, wobei des erste Spiegelelement und das zweite Spiegelelement so zueinander ausrichtbar sind, dass eine Reflexion des ersten Spiegelelements auf das zweite Spiegelelement fällt oder eine Reflexion des zweiten Spiegelelements auf das erste Spiegelelement fällt. Außerdem ist das zweite Spiegelelement zusätzlich (während eines Verstellens des ersten Spiegelelements um einen ersten Umlenkwinkel um die erste Drehachse und des zweiten Spiegelelements um einen zweiten Umlenkwinkel um die zweite Drehachse) um einen dritten Umlenkwinkel um eine dritte Drehachse, welche geneigt zu der zweiten Drehachse ausgerichtet ist, verstellbar. Des Weiteren sind das erste Spiegelelement um einen für den dritten Umlenkwinkel vorgegebenen ersten Ausgleichwinkel um eine erste Spiegelnormale des ersten Spiegelelements und/oder das zweite Spiegelelement um einen für den dritten Umlenkwinkel vorgegebenen zweiten Ausgleichwinkel um eine zweite Spiegelnormale des zweiten Spiegelelements (während eines Verstellens des zweiten Spiegelelements zusätzlich um den dritten Umlenkwinkel um die dritte Drehachse) verstellbar. (Da die wichtigen Elemente der Spiegelvorrichtung bereits in den oben ausgeführten Figuren skizziert sind, wird auf eine bildhafte Darstellung der Spiegelvorrichtung verzichtet.)

Bevorzugter Weise sind das erste Spiegelelement um den für den dritten Umlenkwinkel vorgegebenen ersten Ausgleichwinkel um die erste Spiegelnormale und das zweite Spiegelelement um den für den dritten Umlenkwinkel vorgegebenen zweiten Ausgleichwinkel um die zweite Spiegelnormale gleichzeitig/gemeinsam (während des Verstellens des zweiten Spiegelelements zusätzlich um den dritten Umlenkwinkel um die dritte Drehachse) verstellbar. Die Ausführbarkeit der Spiegelvorrichtung ist jedoch nicht auf diese Weiterbildung limitiert.

Vorzugsweise umfasst die Spiegelvorrichtung eine Steuereinrichtung, mittels welcher der erste Ausgleichwinkel und/oder der zweite Ausgleichwinkel zumindest unter Berücksichtigung des dritten Umlenkwinkels festlegbar sind. Insbesondere kann die Steuereinrichtung dazu ausgelegt sein, den ersten Ausgleichwinkel und/oder den zweiten Ausgleichwinkel unter zusätzlicher Berücksichtigung des ersten Umlenkwinkels und/oder des zweiten Umlenkwinkels festzulegen.

Vorteilhafter Weise ist ein horizontaler Ausgleichwinkel als erster Ausgleichwinkel oder als zweiter Ausgleichwinkel so vorgegeben oder (mittels der Steuereinrichtung) so festlegbar, dass die (oben beschriebene) vertikale Deformation $D_{vert}$, $D_{vert-up}$ und/oder $D_{vert-down}$ reduziert wird. Als Ergänzung oder Alternative kann auch ein vertikaler Ausgleichwinkel als erster Ausgleichwinkel oder als zweiter Ausgleichwinkel so vorgegeben oder (mittels der Steuereinrichtung) so festlegbar sein, dass die (oben definierte) horizontale Deformation $D_{hor}$, $D_{hor-l}$ und/oder $D_{hor-r}$ reduziert wird.

Die vorteilhafte Spiegelvorrichtung kann insbesondere so ausgelegt sein, dass eines der Spiegelemente eine kleinere Verstellweite aufweist und langsamer verstellbar ist, beispielsweise mit einer Frequenz von etwa 60 Hz. Das andere Spiegelelement kann eine größere Verstellweite aufweisen und schneller verstellbar sein. Beispielsweise kann das langsamere Spiegelelement horizontal verstellbar sein, während das schneller verstellbare Spiegelelement vertikal verstellbar ist. Ebenso kann das langsamere Spiegelelement vertikal verstellbar sein, während das schnellere Spiegelelement zum horizontalen Ablenken eines Lichtstrahls eingesetzt wird.

Mittels der vorteilhaften Spiegelvorrichtung kann insbesondere mit einer vertikalen und/oder horizontalen Deformation von unter 5% ein Bild projizierbar sein. Es wird darauf hingewiesen, dass die Reduzierung der Deformation nicht auf einen bestimmten Wert beschränkt ist.

Außerdem kann zusätzlich zu den hier beschriebenen vorteilhaften Funktionen ein elektronisches Korrekturverfahren ausgeführt werden, um die Deformation des projizierten Bilds zusätzlich zu reduzieren. Die hier beschriebenen vorteilhaften Funktionen sind somit mit einer Vielzahl von herkömmlichen Korrekturverfahren kombinierbar.

Die zum Ausführen der oben beschriebenen Funktionen verwendete Spiegelvorrichtung kann insbesondere als Mikrospiegel, als Projektor und/oder als Scanner ausgebildet sein. Deshalb kann die erfindungsgemäße Technologie für eine Vielzahl von verschiedenen Anwendungsmöglichkeiten genutzt werden.

Insbesondere kann die vorteilhafte Spiegelvorrichtung in einem Mobiltelefon oder in einem (tragbaren) persönlichen digitalen Assistent-Gerät (Mobiler Assistent, PDA, Personal Digital Assistant) eingesetzt werden. Da derartige Geräte häufig in einer Ablageposition auf einer im Bezug zu ihrer Größe vergleichsweise großen Platte benutzt werden, ist es vorteilhaft, mittels der oben beschriebenen Funktionen die Möglichkeit zu haben, ein Bild über die Ablageplatte hinweg zu projizieren und gleichzeitig eine vorteilhafte Auflösung des projizierten Bilds zu gewährleisten.

Es wird auch darauf hingewiesen, dass die vorteilhafte Spiegelvorrichtung mit vergleichsweise kleinen Dimensionen ausbildbar ist. Dies erleichtert das Einsetzen der Spiegelvorrichtung in einem Mobiltelefon oder in einem persönlichen digitalen Assistent-Gerät. Die Verwendbarkeit der Spiegelvorrichtung ist jedoch nicht auf Mobiltelefone oder auf persönliche digitale Assistent-Geräte limitiert.

Es wird außerdem darauf hingewiesen, dass die Ausführbarkeit des Verfahrens zum Ausrichten eines Lichtstrahls nicht auf die Verwendung einer bestimmten Spiegelvorrichtung limitiert ist.

**Patentansprüche**

1. Verfahren zum Projizieren eines Bilds mit den Schritten:

   Erzeugen eines Bilds aus Lichtpunkten auf einer Fläche durch Abrastern der Fläche, wozu ein Lichtstrahl (30) mittels eines ersten Spiegelelements (32) und eines zweiten Spiegeletements (34) umgelenkt wird, wobei das erste Spiegelelement (32) und das zweite Spiegelelement (34) so zueinander ausgerichtet werden, dass eine Reflexion des ersten Spiegelelements (32) auf das zweite Spiegelelement (34) fällt, wobei das erste Spiegelelement (32) um einen ersten Umlenkwinkel um eine erste Drehachse (38) verstellt wird und das zweite Spiegelelement (34) um einen zweiten Umlenkwinkel um eine zu der ersten Drehachse (38) geneigte zweite Drehachse (40) verstellt wird;
   und wobei während des Abrasterns der Fläche durch Verstellen des ersten Spiegelelements (32) um den ersten Umlenkwinkel um die erste Drehachse (38) und des zweiten Spiegelelements (34) um den zweiten Umlenkwinkel um die zweite Drehachse (40) das zweite Spiegelelement (34) zusätzlich um einen dritten Umlenkwinkel ($\alpha$) um eine dritte Drehachse (39), welche geneigt zu der zweiten Drehachse (40) ausgerichtet ist, verstellt wird;

   **gekennzeichnet durch** den Schritt, dass während eines Verstellens des zweiten Spiegelelements (34) zusätzlich um den dritten Umlenkwinkel ($\alpha$) um die dritte Drehachse (39) das erste Spiegelelement (32) um einen für den dritten Umlenkwinkel ($\alpha$) vorgegebenen ersten Ausgleichwinkel ($\beta$, $\gamma$, $\delta$) um eine erste Spiegelnormale (58) des ersten Spiegelelements (32), welche senkrecht zu einer ersten reflektierenden Lichtauftrefffläche des ersten Spiegelelements (32) ausgerichtet ist, und/oder das zweite Spiegelelement (34) um einen für den dritten Umlenkwinkel ($\alpha$) vorgegebenen zweiten Ausgleichwinkel ($\beta$, $\gamma$, $\delta$) um eine zweite Spiegelnormale (59) des zweiten Spiegelelements (34), welche senkrecht zu einer zweiten reflektierenden Lichtauftrefffläche des zweiten Spiegelelements (32) ausgerichtet ist, so verstellt werden, dass die zuvor horizontal ausgerichtete erste oder zweite Drehachse (38, 40) um einen horizontalen Ausgleichwinkel als erster Ausgleichwinkel ($\beta$, $\gamma$, ö) oder als zweiter Ausgleichwinkel ($\beta$, $\gamma$, $\delta$) und/oder die zuvor vertikal ausgerichtete erste oder zweite Drehachse (38, 40) um einen vertikalen Ausgleichwinkel als erster Ausgleichwinkel ($\beta$, $\gamma$, $\delta$) oder als zweiter Ausgleichwinkel ($\beta$, $\gamma$, $\delta$)

neu ausgerichtet werden.

2. Verfahren nach Anspruch 1, wobei während des Verstellens des zweiten Spiegelelements (34) zusätzlich um den dritten Umlenkwinkel ($\alpha$) um die dritte Drehachse (39) das erste Spiegelelement (32) um den für den dritten Umlenkwinkel ($\alpha$) vorgegebenen ersten Ausgleichwinkel ($\beta$, $\gamma$, $\delta$) um die erste Spiegelnormale (58) des ersten Spiegelelements (32) und das zweite Spiegelelement (34) um den für den dritten Umlenkwinkel ($\alpha$) vorgegebenen zweiten Ausgleichwinkel ($\beta$, $\gamma$, $\delta$) um die zweite Spiegelnormale (59) des zweiten Spiegelelements (34) so verstellt werden, dass die zuvor horizontal ausgerichtete erste oder zweite Drehachse (38, 40) um einen horizontalen Ausgleichwinkel als erster Ausgleichwinkel ($\beta$, $\gamma$, $\delta$) oder als zweiter Ausgleichwinkel ($\beta$, $\gamma$, $\delta$) und die zuvor vertikal ausgerichtete erste oder zweite Drehachse (38, 40) um einen vertikalen Ausgleichwinkel als erster Ausgleichwinkel ($\beta$, $\gamma$, $\delta$) oder als zweiter Ausgleichwinkel ($\beta$, $\gamma$, $\delta$) neu ausgerichtet werden.

3. Verfahren nach Anspruch 1 oder 2, wobei der erste Ausgleichwinkel ($\beta$, $\gamma$, $\delta$) und/oder der zweite Ausgleichwinkel ($\beta$, $\gamma$, $\delta$) zumindest unter Berücksichtigung des dritten Umlenkwinkels ($\alpha$) festgelegt werden.

4. Verfahren nach einem der vorhergehenden Ansprüchen, wobei der horizontale Ausgleichwinkel ($\beta$, $\gamma$) als erster Ausgleichwinkel ($\beta$, $\gamma$, $\delta$) oder als zweiter Ausgleichwinkel ($\beta$, $\gamma$, $\delta$) so vorgegeben oder festgelegt wird, dass eine vertikale Deformation $D_{vert}$ zweier benachbarter und horizontal ausgerichteter Linien (46, 48) aus Lichtpunkten (46a, 48a) des ausgerichtete Lichtstrahls (30) auf einer Lichtauftrefffläche (36) reduziert wird, wobei die vertikale Deformation $D_{vert}$ definiert ist mit

$$D_{vert} = (y_{max} - y_{min})/y_{max},$$

wobei $y_{max}$ eine maximale Abstandskomponente in vertikaler Raumrichtung (50) der Lichtpunkte (46a) der ersten horizontal ausgerichteten Linie (46) von den Lichtpunkten (48a) der zweiten horizontal ausgerichteten Linie (48) und $y_{min}$ eine minimale Abstandskomponente in vertikaler Raumrichtung (50) der Lichtpunkte (46a) der ersten horizontal ausgerichteten Linie (46) von den Lichtpunkten (48a) der zweiten horizontal ausgerichteten Linie (48) sind.

5. Verfahren nach einem der vorhergehenden Ansprüchen, wobei der vertikale Ausgleichwinkel ($\beta$, $\delta$) als erster Ausgleichwinkel ($\beta$, $\gamma$, $\delta$) oder als zweiter Ausgleichwinkel ($\beta$, $\gamma$, $\delta$) so vorgegeben oder festgelegt wird, dass eine horizontale Deformation $D_{hor}$ zweier benachbarter und vertikal ausgerichteter Linien (52, 54) aus Lichtpunkten (52a, 54a) des ausgerichtete Lichtstrahls (30) auf einer Lichtauftrefffläche (36) reduziert wird, wobei die horizontale Deformation $D_{hor}$ definiert ist mit

$$D_{hor} = (x_{max} - x_{min})/x_{max},$$

wobei $x_{max}$ eine maximale Abstandskomponente in horizontaler Raumrichtung (56) der Lichtpunkte (52a) der ersten vertikal ausgerichteten Linie (52) von den Lichtpunkten (54a) der zweiten vertikal ausgerichteten Linie (54) und $x_{min}$ eine minimale Abstandskomponente in horizontaler Raumrichtung (56) der Lichtpunkte (52a) der ersten vertikal ausgerichteten Linie (52) von den Lichtpunkten (54a) der zweiten vertikal ausgerichteten Linie (54) sind.

6. Bildprojektor enthaltend einem um eine erste Drehachse (38) verstellbaren ersten Spiegelelement (32) und einem um eine zu der ersten Drehachse (38) geneigte zweite Drehachse (40) verstellbaren zweiten Spiegelelement (34), wobei das erste Spiegelelement (32) und das zweite Spiegelelement (34) so zueinander ausrichtbar sind, dass eine Reflexion des ersten Spiegelelements (32) auf das zweite Spiegelelement (34) fällt, wobei ein mittels des ersten Spiegelelements (32) und des zweiten Spiegelelements (34) umgelenkter Lichtstrahl (30) über eine Fläche so abrasterbar ist, dass ein Bild aus Lichtpunkten auf der Fläche erzeugbar ist;
und wobei während eines Abrasterns der Fläche durch Verstellen des ersten Spiegelelements (32) um einen ersten Umlenkwinkel um die erste Drehachse (38) und des zweiten Spiegelelements (34) um einen zweiten Umlenkwinkel um die zweite Drehachse (40) das zweite Spiegelelement (34) zusätzlich um einen dritten Umlenkwinkel ($\alpha$) um eine dritte Drehachse (39), welche geneigt zu der zweiten Drehachse (40) ausgerichtet ist, verstellbar ist;
**dadurch gekennzeichnet, dass** die ersten und zweiten Spiegelelemente so gesteuert sind dass während eines Verstellens des zweiten Spiegelelements (34) zusätzlich um den dritten Umlenkwinkel ($\alpha$) um die dritte Drehachse (39) das erste Spiegelelement (32) um einen für den dritten Umlenkwinkel ($\alpha$) vorgegebenen ersten Ausgleichwinkel ($\beta$, $\gamma$, $\delta$) um eine erste Spiegelnormale (58) des ersten Spiegelelements (32), welche senkrecht zu einer ersten reflektierenden Lichtauftrefffläche des ersten Spiegelelements (32) ausgerichtet ist, und/oder das zweite Spiegelelement (34) um einen für den dritten Umlenkwinkel ($\alpha$) vorgegebenen zweiten Ausgleichwinkel ($\beta$, $\gamma$, $\delta$) um eine zweite Spiegelnormale (59) des zweiten Spiegelelements (34), welche senkrecht zu einer zweiten reflektierenden Lichtauftrefffläche des zweiten Spiegelelements (34) ausgerichtet ist, so verstellt werden, dass die zuvor horizontal ausgerichtete erste oder zweite Drehachse (38, 40) um einen horizontalen Ausgleichwinkel als erster Ausgleichwinkel ($\beta$, $\gamma$, $\delta$) oder als zweiter Ausgleichwinkel ($\beta$, $\gamma$, $\delta$) und/oder die zuvor vertikal ausgerichtete erste oder zweite Drehachse (38, 40) um einen vertikalen Ausgleichwinkel als erster Ausgleichwinkel ($\beta$, $\gamma$, $\delta$) oder als zweiter Ausgleichwinkel ($\beta$, $\gamma$, $\delta$) neu ausgerichtet werden.

7. Projektor nach Anspruch 6, wobei während des Verstellens des zweiten Spiegelelements (34) zusätzlich um den dritten Umlenkwinkel ($\alpha$) um die dritte Drehachse (39) das erste Spiegelelement (32) um den für den dritten Umlenkwinkel ($\alpha$) vorgegebenen ersten Ausgleichwinkel ($\beta$, $\gamma$, $\delta$) um die erste Spiegelnormale (58) des ersten Spiegelelements (32) und das zweite Spiegelelement (34) um den für den dritten Umlenkwinkel ($\alpha$) vorgegebenen zweiten Ausgleichwinkel ($\beta$, $\gamma$, $\delta$) um die zweite Spiegelnormale (59) des zweiten Spiegelelements (34) so verstellbar sind, dass die zuvor horizontal ausgerichtete erste oder zweite Drehachse (38, 40) um einen horizontalen Ausgleichwinkel als erster Ausgleichwinkel ($\beta$, $\gamma$, $\delta$) oder als zweiter Ausgleichwinkel ($\beta$, $\gamma$, $\delta$) und die zuvor vertikal ausgerichtete erste oder zweite Drehachse (38, 40) um einen vertikalen Ausgleichwinkel als erster Ausgleichwinkel ($\beta$, $\gamma$, $\delta$) oder als zweiter Ausgleichwinkel ($\beta$, $\gamma$, $\delta$) neu ausrichtbar sind.

8. Projektor nach Anspruch 6 oder 7, wobei die Spiegelvorrichtung eine Steuereinrichtung umfasst, mittels welcher der erste Ausgleichwinkel ($\beta$, $\gamma$, $\delta$) und/oder der zweite Ausgleichwinkel ($\beta$, $\gamma$, $\delta$) zumindest unter Berücksichtigung des dritten Umlenkwinkels ($\alpha$) festlegbar sind.

9. Projektor nach einem der Ansprüche 6 bis 8, wobei der horizontale Ausgleichwinkel ($\beta$, $\gamma$) als erster Ausgleichwinkel ($\beta$, $\gamma$, $\delta$) der als zweiter Ausgleichwinkel ($\beta$, $\gamma$, $\delta$) so vorgegeben oder festlegbar ist, dass eine vertikale Deformation $D_{vert}$ zweier benachbarter und horizontal ausgerichteter Linien (46, 48) aus Lichtpunkten (46a, 48a) des ausgerichtete Lichtstrahls (30) auf einer Lichtauftrefffläche (36) reduziert wird, wobei die vertikale Deformation $D_{vert}$ definiert ist mit

$$D_{vert} = (y_{max} - y_{min})/y_{max},$$

wobei $y_{max}$ eine maximale Abstandskomponente in vertikaler Raumrichtung (50) der Lichtpunkte (46a) der ersten horizontal ausgerichteten Linie (46) von den Lichtpunkten (48a) der zweiten horizontal aus-

gerichteten Linie (48) und $y_{min}$ eine minimale Abstandskomponente in vertikaler Raumrichtung (50) der Lichtpunkte (46a) der ersten horizontal ausgerichteten Linie (46) von den Lichtpunkten (48a) der zweiten horizontal ausgerichteten Linie (48) sind.

10. Projektor nach einem der Ansprüche 6 bis 9, wobei der vertikale Ausgleichwinkel ($\beta$, $\delta$) als erster Ausgleichwinkel ($\beta$, $\gamma$, $\delta$) oder als zweiter Ausgleichwinkel ($\beta$, $\gamma$, $\delta$) so vorgegeben oder festlegbar ist, dass eine horizontale Deformation $D_{hor}$ zweier benachbarter und vertikal ausgerichteter Linien (52, 54) aus Lichtpunkten (52a, 54a) des ausgerichtete Lichtstrahls (30) auf einer Lichtauftrefffläche (36) reduziert wird, wobei die horizontale Deformation $D_{hor}$ definiert ist mit

$$D_{hor} = (x_{max} - x_{min})/x_{max},$$

wobei $x_{max}$ eine maximale Abstandskomponente in horizontaler Raumrichtung (56) der Lichtpunkte (52a) der ersten vertikal ausgerichteten Linie (52) von den Lichtpunkten (54a) der zweiten vertikal ausgerichteten Linie (54) und $x_{min}$ eine minimale Abstandskomponente in horizontaler Raumrichtung (56) der Lichtpunkte (52a) der ersten vertikal ausgerichteten Linie (52) von den Lichtpunkten (54a) der zweiten vertikal ausgerichteten Linie (54) sind.

11. Mobiltelefon mit einem Projektor nach einem der Ansprüche 6 bis 10.

12. Persönliches digitales Assistent-Gerät mit einem Projektor nach einem der Ansprüche 6 bis 10.

**Claims**

1. Method for projecting an image, having the steps of:

generating an image of light points on a surface by scanning the surface, to which end a light beam (30) is deflected using a first mirror element (32) and a second mirror element (34), wherein the first mirror element (32) and the second mirror element (34) are aligned with respect to each other such that a reflection from the first mirror element (32) is incident on the second mirror element (34), wherein the first mirror element (32) is moved by a first deflection angle about a first rotational axis (38) and the second mirror element (34) is moved by a second deflection angle about a second rotational axis (40), which is at an angle with respect to the first rotational axis (38);
and wherein the second mirror element (34) is additionally moved by a third deflection angle ($\alpha$) about a third rotational axis (39), which is at an angle with respect to the second rotational axis (40), during the scanning of the surface by moving the first mirror element (32) by the first deflection angle about the first rotational axis (38) and moving the second mirror element (34) by the second deflection angle about the second rotational axis (40),

**characterized by** the step in which,
during the additional movement of the second mirror element (34) by the third deflection angle ($\alpha$) about the third rotational axis (39), the first mirror element (32) is moved by a first compensation angle ($\beta$, $\gamma$, $\delta$), specified for the third deflection angle ($\alpha$), about a first mirror normal (58) of the first mirror element (32), which is aligned perpendicularly to a first reflecting light incidence surface of the first mirror element (32), and/or the second mirror element (32) is moved by a second compensation angle ($\beta$, $\gamma$, $\delta$), specified for the third deflection angle ($\alpha$), about a second mirror normal (59) of the second mirror element (34), which is aligned perpendicularly to a second reflecting light incidence surface of the second mirror element (32), in a manner such that the previously horizontally aligned first or second rotational axis (38, 40) is realigned by a horizontal compensation angle as the first compensation angle ($\beta$, $\gamma$, $\delta$) or as the second compensation angle ($\beta$, $\gamma$, $\delta$) and/or the previously vertically aligned first or second rotational axis (38, 40) is realigned by a vertical compensation angle as the first compensation angle ($\beta$, $\gamma$, $\delta$) or as the second compensation angle ($\beta$, $\gamma$, $\delta$).

2. Method according to Claim 1, wherein during the additional movement of the second mirror element (34) by the third deflection angle ($\alpha$) about the third rotational axis (39), the first mirror element (32) is moved by the first compensation angle ($\beta$, $\gamma$, $\delta$), specified for the third deflection angle ($\alpha$), about the first mirror normal (58) of the first mirror element (32) and the second mirror element (34) is moved by the second compensation angle ($\beta$, $\gamma$, $\delta$), specified for the third deflection angle ($\alpha$), about the second mirror normal (59) of the second mirror element (34) in a manner such that the previously horizontally aligned first or second rotational axis (38, 40) is realigned by a horizontal compensation angle as the first compensation angle ($\beta$, $\gamma$, $\delta$) or as the second compensation angle ($\beta$, $\gamma$, $\delta$) and the previously vertically aligned first or second rotational axis (38, 40) is realigned by a vertical compensation angle as the first compensation angle ($\beta$, $\gamma$, $\delta$) or as the second compensation angle ($\beta$, $\gamma$, $\delta$).

3. Method according to Claim 1 or 2, wherein the first compensation angle ($\beta$, $\gamma$, $\delta$) and/or the second com-

pensation angle $(\beta, \gamma, \delta)$ are stipulated at least taking into consideration the third deflection angle $(\alpha)$.

4. Method according to one of the preceding claims, wherein the horizontal compensation angle $(\beta, \gamma)$ as the first compensation angle $(\beta, \gamma, \delta)$ or as the second compensation angle $(\beta, \gamma, \delta)$ is specified or stipulated such that a vertical deformation $D_{vert}$ of two neighbouring and horizontally aligned lines (46, 48) of light points (46a, 48a) of the aligned light beam (30) on a light incidence surface (36) is reduced, wherein the vertical deformation $D_{vert}$ is defined with

$$D_{vert} = (y_{max} - y_{min}) / y_{max},$$

wherein $y_{max}$ is a maximum distance component in the vertical spatial direction (50) of the light points (46a) of the first horizontally aligned line (46) from the light points (48a) of the second horizontally aligned line (48) and $y_{min}$ is a minimum distance component in the vertical spatial direction (50) of the light points (46a) of the first horizontally aligned line (46) from the light points (48a) of the second horizontally aligned line (48).

5. Method according to one of the preceding claims, wherein the vertical compensation angle $(\beta, \delta)$ as the first compensation angle $(\beta, \gamma, \delta)$ or as the second compensation angle $(\beta, \gamma, \delta)$ is specified or stipulated such that a horizontal deformation $D_{hor}$ of two neighbouring and vertically aligned lines (52, 54) of light points (52a, 54a) of the aligned light beam (30) on a light incidence surface (36) is reduced, wherein the horizontal deformation $D_{hor}$ is defined with

$$D_{hor} = (x_{max} - x_{min}) / x_{max},$$

wherein $x_{max}$ is a maximum distance component in the horizontal spatial direction (56) of the light points (52a) of the first vertically aligned line (52) from the light points (54a) of the second vertically aligned line (54) and $x_{min}$ is a minimum distance component in the horizontal spatial direction (56) of the light points (52a) of the first vertically aligned line (52) from the light points (54a) of the second vertically aligned line (54).

6. Image projector, including:

a first mirror element (32), moveable about a first rotational axis (38), and a second mirror element (34), moveable about a second rotational axis (40) which is at an angle with respect to the first rotational axis (38), wherein the first mirror element (32) and the second mirror element (34) are alignable with respect to each other such that a reflection from the first mirror element (32) is incident on the second mirror element (34), wherein a light beam (30), which is deflected using the first mirror element (32) and the second mirror element (34), is scannable across a surface such that an image of light points is generatable on the surface;
and wherein, during the scanning of the surface by moving the first mirror element (32) by a first deflection angle about the first rotational axis (38) and the second mirror element (34) by a second deflection angle about the second rotational axis (40), the second mirror element (34) is additionally moveable by a third deflection angle $(\alpha)$ about a third rotational axis (39), which is aligned at an angle with respect to the second rotational axis (40);

**characterized in that**
the first and second mirror elements are controlled such that, during the additional movement of the second mirror element (34) by the third deflection angle $(\alpha)$ about the third rotational axis (39), the first mirror element (32) is moved by a first compensation angle $(\beta, \gamma, \delta)$, specified for the third deflection angle $(\alpha)$, about a first mirror normal (58) of the first mirror element (32), which is aligned perpendicularly to a first reflecting light incidence surface of the first mirror element (32), and/or the second mirror element (34) is moved by a second compensation angle $(\beta, \gamma, \delta)$, specified for the third deflection angle $(\alpha)$, about a second mirror normal (59) of the second mirror element (34), which is aligned perpendicularly to a second reflecting light incidence surface of the second mirror element (34), in a manner such that the previously horizontally aligned first or second rotational axis (38, 40) is realigned by a horizontal compensation angle as the first compensation angle $(\beta, \gamma, \delta)$ or as the second compensation angle $(\beta, \gamma, \delta)$ and/or the previously vertically aligned first or second rotational axis (38, 40) is realigned by a vertical compensation angle as the first compensation angle $(\beta, \gamma, \delta)$ or as the second compensation angle $(\beta, \gamma, \delta)$.

7. Projector according to Claim 6, wherein, during the additional movement of the second mirror element (34) by the third deflection angle $(\alpha)$ about the third rotational axis (39), the first mirror element (32) is moveable by the first compensation angle $(\beta, \gamma, \delta)$, specified for the third deflection angle $(\alpha)$, about the first mirror normal (58) of the first mirror element (32) and the second mirror element (34) is moveable by the second compensation angle $(\beta, \gamma, \delta)$, specified for the third deflection angle $(\alpha)$, about the second mirror normal (59) of the second mirror element (34) in a manner such that the previously horizontally aligned first or second rotational axis (38, 40) is realignable by a horizontal compensation angle as the first compensation angle ($\beta$, $\gamma$, $\delta$) or as the second compensation angle ($\beta$, $\gamma$, $\delta$) and the previously vertically aligned first or second rotational axis (38, 40) is realignable by a vertical compensation angle as the first compensation angle ($\beta$, $\gamma$, $\delta$) or as the second compensation angle ($\beta$, $\gamma$, $\delta$).

8. Projector according to Claim 6 or 7, wherein the mirror apparatus comprises a control device, by way of which the first compensation angle ($\beta$, $\gamma$, $\delta$) and/or the second compensation angle ($\beta$, $\gamma$, $\delta$) are stipulatable at least taking into consideration the third deflection angle ($\alpha$).

9. Projector according to one of Claims 6 to 8, wherein the horizontal compensation angle ($\beta$, $\gamma$) as the first compensation angle ($\beta$, $\gamma$, $\delta$) or as the second compensation angle ($\beta$, $\gamma$, $\delta$) is specified or stipulatable such that a vertical deformation $D_{vert}$ of two neighbouring and horizontally aligned lines (46, 48) of light points (46a, 48a) of the aligned light beam (30) on a light incidence surface (36) is reduced, wherein the vertical deformation $D_{vert}$ is defined with

$$D_{vert} = (y_{max} - y_{min}) / y_{max},$$

wherein $y_{max}$ is a maximum distance component in the vertical spatial direction (50) of the light points (46a) of the first horizontally aligned line (46) from the light points (48a) of the second horizontally aligned line (48) and $y_{min}$ is a minimum distance component in the vertical spatial direction (50) of the light points (46a) of the first horizontally aligned line (46) from the light points (48a) of the second horizontally aligned line (48).

10. Projector according to one of Claims 6 to 9, wherein the vertical compensation angle ($\beta$, $\delta$) as the first compensation angle ($\beta$, $\gamma$, $\delta$) or as the second compensation angle ($\beta$, $\gamma$, $\delta$) is specified or stipulatable such that a horizontal deformation $D_{hor}$ of two neighbouring and vertically aligned lines (52, 54) of light points (52a, 54a) of the aligned light beam (30) on a light incidence surface (36) is reduced, wherein the horizontal deformation $D_{hor}$ is defined with

$$D_{hor} = (x_{max} - x_{min}) / x_{max},$$

wherein $x_{max}$ is a maximum distance component in the horizontal spatial direction (56) of the light points (52a) of the first vertically aligned line (52) from the light points (54a) of the second vertically aligned line (54) and $x_{min}$ is a minimum distance component in the horizontal spatial direction (56) of the light points (52a) of the first vertically aligned line (52) from the light points (54a) of the second vertically aligned line (54).

11. Mobile telephone having a projector according to one of Claims 6 to 10.

12. Personal digital assistant device having a projector according to one of Claims 6 to 10.

## Revendications

1. Procédé pour projeter une image, comprenant les étapes consistant à :

générer une image à partir de points lumineux sur une surface par balayage de la surface, un faisceau lumineux (30) étant à cet effet dévié au moyen d'un premier élément à miroir (32) et d'un deuxième élément à miroir (34), dans lequel le premier élément à miroir (32) et le deuxième élément à miroir (34) sont orientés l'un vers l'autre de manière à ce qu'une réflexion par le premier élément à miroir (32) soit incidente sur le deuxième élément à miroir (34), dans lequel le premier élément à miroir (32) est décalé d'un premier angle de déviation autour d'un premier axe de rotation (38) et le deuxième élément à miroir (34) est décalé d'un deuxième angle de déviation autour d'un deuxième axe de rotation (40) incliné par rapport au premier axe de rotation (38) ; et dans lequel le deuxième élément à miroir (34) est en outre décalé d'un troisième angle de déviation ($\alpha$) autour d'un troisième axe de rotation (39) qui est incliné par rapport au deuxième axe de rotation (40) pendant le balayage de la surface en décalant le premier élément à miroir (32) du premier angle de déviation autour du premier axe de rotation (38) et le deuxième élément à miroir (34) du deuxième angle de déviation autour du deuxième axe de rotation (40) ;

**caractérisé par** l'étape consistant à faire en sorte que, pendant un premier décalage supplémentaire du deuxième élément à miroir (34) du troisième angle de déviation ($\alpha$) autour du troisième axe de rotation (39), le premier élément à miroir (32) soit décalé d'un premier angle de compensation prédéterminé ($\beta$, $\gamma$, $\delta$) pour le troisième angle de déviation ($\alpha$) autour d'une première normale au miroir (58) du premier élément à miroir (32), qui est orientée perpendiculairement à une première surface réfléchissante d'incidence de lumière du premier élément à miroir (32), et/ou que le deuxième élément à miroir (34) soit décalé d'un deuxième angle de compensation prédéterminé ($\beta$, $\gamma$, $\delta$) prédéterminé pour le troisième angle de déviation ($\alpha$) autour d'une deuxième normale au miroir (59) du deuxième élément à miroir (34), qui est orientée perpendiculairement à une deuxième surface réfléchissante d'incidence de lumière du deuxième élément à miroir (32), de manière à ce que le premier ou le deuxième axe de rotation (38, 40) préalablement orienté horizontalement soit de nouveau orienté selon un angle de compensation horizontal en tant que premier angle de compensation ($\beta$, $\gamma$, $\delta$) ou en tant que deuxième angle de compensation ($\beta$, $\gamma$, $\delta$) et/ou à ce que le premier ou le deuxième axe de rotation (38, 40) préalablement orienté verticalement soit de nouveau orienté selon un angle de compensation vertical en tant que premier angle de compensation ($\beta$, $\gamma$, $\delta$) ou en tant que deuxième angle de compensation ($\beta$, $\gamma$, $\delta$).

2. Procédé selon la revendication 1, dans lequel, pendant le décalage supplémentaire du deuxième élément à miroir (34) du troisième angle de déviation ($\alpha$) autour du troisième axe de rotation (39), le premier élément à miroir (32) est décalé du premier angle de compensation ($\beta$, $\gamma$, $\delta$) prédéterminé pour le troisième angle de déviation ($\alpha$) autour de la première normale au miroir (58) du premier élément à miroir (32), et le deuxième élément à miroir (34) est décalé du deuxième angle de compensation ($\beta$, $\gamma$, $\delta$) prédéterminé pour le troisième angle de déviation ($\alpha$) autour de la deuxième normale au miroir (59) du deuxième élément à miroir (34) de manière à ce que le premier ou le deuxième axe de rotation (38, 40) préalablement orienté horizontalement soit de nouveau orienté selon un angle de compensation horizontal en tant que premier angle de compensation ($\beta$, $\gamma$, $\delta$) ou en tant que deuxième angle de compensation ($\beta$, $\gamma$, $\delta$) et à ce que le premier ou deuxième axe de rotation (38, 40) préalablement orienté verticalement soit de nouveau orienté selon un angle de compensation vertical en tant que premier angle de compensation ($\beta$, $\gamma$, $\delta$) ou en tant que deuxième angle de compensation ($\beta$, $\gamma$, $\delta$).

3. Procédé selon la revendication 1 ou 2, dans lequel le premier angle de compensation ($\beta$, $\gamma$, $\delta$) et/ou le deuxième angle de compensation ($\beta$, $\gamma$, $\delta$) sont au moins établis en tenant compte du troisième angle de déviation ($\alpha$).

4. Procédé selon l'une quelconque des revendications précédentes, dans lequel l'angle de compensation horizontal ($\beta$, $\gamma$) est prédéterminé ou établi en tant que premier angle de compensation ($\beta$, $\gamma$, $\delta$) ou en tant que deuxième angle de compensation ($\beta$, $\gamma$, $\delta$) de manière à ce qu'une déformation verticale $D_{vert}$ de deux lignes voisines et orientées horizontalement (46, 48) soit réduite depuis des points lumineux (46a, 48a) du faisceau lumineux orienté (30) vers une surface d'incidence de lumière (36), dans lequel la déformation verticale $D_{vert}$ est définie par

$$D_{vert} = (y_{max} - y_{min}) / y_{max},$$

où $y_{max}$ est une composante de distance maximale dans la direction spatiale verticale (50) des points lumineux (46a) depuis la première ligne orientée horizontalement (46) des points lumineux (48a) de la deuxième ligne orientée horizontalement (48) et $y_{min}$ est une composante de distance minimale dans une direction spatiale verticale (50) des points lumineux (46a) de la première ligne orientée horizontalement (46) depuis les points lumineux (48a) de la deuxième ligne orientée horizontalement (48).

5. Procédé selon l'une quelconque des revendications précédentes, dans lequel l'angle de compensation vertical ($\beta$, $\delta$) est prédéterminé ou établi en tant que premier angle de compensation ($\beta$, $\gamma$, $\delta$) ou en tant que deuxième angle de compensation ($\beta$, $\gamma$, $\delta$) de manière à ce qu'une déformation horizontale $D_{hor}$ de deux lignes voisines et orientées verticalement (52, 54) soit réduite à partir de points lumineux (52a, 54a) du faisceau lumineux orienté (30) vers une surface d'incidence de lumière (36), dans lequel la déformation horizontale $D_{hor}$ est définie par

$$D_{hor} = (x_{max} - x_{min}) / x_{max},$$

où $x_{max}$ est une composante de distance maximale dans la direction spatiale horizontale (56) des points lumineux (52a) de la première ligne orientée verticalement (52) depuis les points lumineux (54a) de la deuxième ligne orientée verticalement (54) et $x_{min}$ est une composante de distance minimale dans la direction spatiale horizontale (56) des points lumineux (52a) de la première ligne orientée verticalement (52) depuis les points lumineux (54a) de la deuxième ligne orientée verticalement (54).

6. Projecteur d'image comportant :

un premier élément à miroir (32) pouvant être décalé autour d'un premier axe de rotation (38) et un deuxième élément à miroir (34) pouvant être décalé autour d'un deuxième axe de rotation (40) incliné par rapport au premier axe de rotation (38), dans lequel le premier élément à miroir (32) et le deuxième élément à miroir (34) peuvent être orientés l'un par rapport à l'autre de manière à ce qu'une réflexion par le premier élément à miroir (32) soit incidente sur le deuxième élément à miroir (34), dans lequel un faisceau lumineux (30) dévié au moyen du premier élément à miroir (32) et du deuxième élément à miroir (34) peut effectuer un mouvement de balayage sur une surface de manière à ce qu'une image puisse être générée à partir de points lumineux sur la surface ;

et dans lequel, pendant un balayage de la surface, le deuxième élément à miroir (34) peut en outre être décalé d'un troisième angle de déviation (α) autour d'un troisième axe de rotation (39) qui est orienté de manière inclinée par rapport au deuxième axe de rotation (40) en décalant le premier élément à miroir (32) d'un premier angle de déviation autour du premier axe de rotation (38) et le deuxième élément à miroir (34) d'un deuxième angle de déviation autour du deuxième axe de rotation (40) ;

**caractérisé en ce que** les premier et deuxième éléments à miroir sont commandés de manière à ce que, pendant un décalage supplémentaire du deuxième élément à miroir (34) du troisième angle de déviation (α) autour du troisième axe de rotation (39), le premier élément à miroir (32) soit décalé d'un premier angle de compensation prédéterminé (β, γ, δ) pour le troisième angle de déviation (α) autour d'une première normale au miroir (58) du premier élément à miroir (32), qui est orientée perpendiculairement à une première surface réfléchissante d'incidence de lumière du premier élément à miroir (32), et/ou que le deuxième élément à miroir (34) soit décalé d'un deuxième angle de compensation (β, γ, δ) prédéterminé pour le troisième angle de déviation (α) autour d'une deuxième normale au miroir (59) du deuxième élément à miroir (34), qui est orientée perpendiculairement à une deuxième surface réfléchissante d'incidence de lumière du deuxième élément à miroir (34), de manière à ce que le premier ou le deuxième axe de rotation (38, 40) préalablement orienté horizontalement soit de nouveau orienté selon un angle de compensation horizontal en tant que premier angle de compensation (β, γ, δ) ou en tant que deuxième angle de compensation (β, γ, δ) et/ou à ce que le premier ou le deuxième axe de rotation (38, 40) préalablement orienté verticalement soit de nouveau orienté selon un angle de compensation vertical en tant que premier angle de compensation (β, γ, δ) ou en tant que deuxième angle de compensation (β, γ, δ).

7. Projecteur selon la revendication 6, dans lequel, pendant le décalage supplémentaire du deuxième élément à miroir (34) du troisième angle de déviation (α) autour du troisième axe de rotation (39), le premier élément à miroir (32) peut être décalé du premier angle de compensation (β, γ, δ) prédéterminé pour le troisième angle de déviation (α) autour de la première normale au miroir (58) du premier élément à miroir (32) et le deuxième élément à miroir (34) peut être décalé du deuxième angle de compensation (β, γ, δ) prédéterminé pour le troisième angle de déviation (α) autour de la deuxième normale au miroir (59) du deuxième élément à miroir (34) de manière à ce que le premier ou le deuxième axe de rotation (38, 40) préalablement orienté horizontalement puisse de nouveau être orienté selon un angle de compensation horizontal en tant que premier angle de compensation (β, γ, δ) ou en tant que deuxième angle de compensation (β, γ, δ) et à ce que le premier ou le deuxième axe de rotation (38, 40) préalablement orienté verticalement puisse être de nouveau orienté selon un angle de compensation vertical en tant que premier angle de compensation (β, γ, δ) ou en tant que deuxième angle de compensation (β, γ, δ).

8. Projecteur selon la revendication 6 ou 7, dans lequel le dispositif à miroir comprend un dispositif de commande au moyen duquel le premier angle de compensation (β, γ, δ) et/ou le deuxième angle de compensation (β, γ, δ) peuvent être établis au moins en tenant compte du troisième angle de déviation (α).

9. Projecteur selon l'une quelconque des revendications 6 à 8, dans lequel l'angle de compensation horizontal (β, γ) est prédéterminé ou peut être établi en tant que premier angle de compensation (β, γ, δ) ou en tant que deuxième angle de compensation (β, γ, δ) de manière à ce qu'une déformation verticale $D_{vert}$ de deux lignes voisines et orientées horizontalement (46, 48) puisse être réduite depuis des points lumineux (46a, 48a) du faisceau lumineux orienté (30) vers une surface d'incidence de lumière (36), dans lequel la déformation verticale $D_{vert}$ est définie par

$$D_{vert} = (y_{max} - y_{min}) / y_{max},$$

où $y_{max}$ est une composante de distance maximale dans la direction spatiale verticale (50) des points lumineux (46a) de la première ligne orientée horizontalement (46) depuis les points lumineux (48a) de la deuxième ligne orientée horizontalement (48) et $y_{min}$ est une composante de distance minimale dans la direction spatiale verticale (50) des points lumineux (46a) de la première ligne orientée horizontalement (46) depuis les points lumineux (48a) de la deuxième ligne orientée horizontalement (48).

10. Projecteur selon l'une quelconque des revendications 6 à 9, dans lequel l'angle de compensation vertical (β, δ) est prédéterminé ou peut être établi en tant que premier angle de compensation (β, γ, δ) ou en tant que deuxième angle de compensation (β, y, δ) de manière à ce qu'une déformation horizontale $D_{hor}$ de deux lignes voisines et orientées verticalement (52, 54) soit réduite depuis des points lumineux (52a, 54a) du faisceau lumineux orienté (30) vers une surface d'incidence de lumière (36), dans lequel

la déformation horizontale $D_{hor}$ est définie par

$$D_{hor} = (x_{max} - x_{min}) / x_{max},$$

où $x_{max}$ est une composante de distance maximale dans la direction spatiale horizontale (56) des points lumineux (52a) de la première ligne orientée verticalement (52) depuis les points lumineux (54a) de la deuxième ligne orientée verticalement (54) et $x_{min}$ est une composante de distance minimale dans la direction spatiale horizontale (56) des points lumineux (52a) de la première ligne orientée verticalement (52) depuis les points lumineux (54a) de la deuxième ligne orientée verticalement (54).

11. Téléphone mobile comportant un projecteur selon l'une quelconque des revendications 6 à 10.

12. Appareil assistant numérique personnel comportant un projecteur selon l'une quelconque des revendications 6 à 10.

Fig. 1
(Stand der Technik)

Fig. 2a

Fig. 2b

Fig. 2c

Fig. 2d

Fig. 2e

Fig. 2f

Fig. 3a

Fig. 3b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6776492 B1